# EUROPÄISCHE PATENTANMELDUNG

(11) **EP 0 646 428 A1**
(43) Veröffentlichungstag der Anmeldung: **05.04.1995**
(21) Anmeldenummer: 94112004.0
(22) Anmeldetag: 01.08.1994
(51) Int. Cl.: B21D 51/26, B05D 7/14

(54) **Verfahren und Anlage zur Innen- und/oder Aussenbeschichtung von Blech für Dosenzargen von Dreiteildosen**

(30) Priorität: 30.09.1993 CH 2936/93
(71) Anmelder: ELPATRONIC AG, CH-6303 Zug (CH)
(72) Erfinder: Frei, Matthias, CH-5312 Döttingen (CH); Nussbaumer, Hans-Jürg, CH-8646 Wagen (CH); Levy, Gideon, Dr., CH-6644 Orselina (CH)

(57) **Zusammenfassung**

Dosenzargen werden hergestellt, indem ein Blechabschnitt rohrförmig gerundet und entlang der aneinander anliegenden Kanten verschweisst wird. Gleichzeitig ist üblicherweise das Blech auf der künftigen Innenseite beschichtet, was z.B. erlaubt, Nahrungsmittel abzufüllen. Dort wo die Schweissnaht hergestellt wird, darf jedoch keine Beschichtung vorhanden sein, weil sonst der Schweissprozess nachteilig beeinflusst werden kann. Entsprechend muss die Beschichtung dem künftigen Dosenformat entsprechend, z.B. als Folie auf dem Blechcoil aufgebracht werden, was aufwendig ist. Erfindungsgemäss wird die Beschichtung unmittelbar vor dem Schweissprozess formatgerecht aufgetragen, was erlaubt, die Beschichtung gerade und so weit aufzutragen, wie sie laufend gebraucht wird.

## Beschreibung

Die Vorliegende Erfindung betrifft ein Verfahren nach dem Oberbegriff von Anspruch 1, Blech nach demjenigen von Anspruch 14 und eine Anlage nach demjenigen von Anspruch 18.

Aus der EP-A-0 521 606 ist es bekannt, Blech für Dosenzargen von Dreiteildosen mit einem Thermoset- oder Thermoplastmaterial-Film zu versehen, indem ein oder mehrere Filmfolien des erwähnten Materials von einem Wickler abgewickelt und ein- oder mehrlagig auf die eine und/oder andere Seite des Bleches abgelegt werden.

Bekanntlich muss zur Erstellung der Längsschweissung an derartigen Dosenzargen der zu verschweissende Randbereich von Beschichtungsmaterial frei sein. Dies wird gemäss der erwähnten Schrift dadurch erreicht, dass das auf das Blech abgelegte Folienband nur so breit dimensioniert wird, dass die erwähnten randständigen Bereiche für das nachmalige Schweissen frei bleiben.

Nachteilig an diesem Vorgehen ist
- dass für die Herstellung der separat dem Blech zugeführten Folie ein eigener Fertigungsprozess vorgesehen werden muss
- dass höchste Anforderungen an die Präzision der Blech- und Folienzusammenführung beispielsweise bezüglich Vorschubsgeschwindigkeiten, Relativposition etc. erforderlich sind und dies für Folien im u-Bereich, was die einsetzbare Foliendicke - aus Handhabungsgründen - nach unten begrenzt, und zwar auf Dicken, welche für das Erzielen der angestrebten Schutzwirkung am Blech überdimensioniert sind.

Die vorliegende Erfindung bezweckt, ausgehend von einem Verfahren bzw. einer Anlage genannter Art, u.a. die erwähnten Nachteile zu beheben. Dies wird beim Verfahren, bei dessen Durchführung nach dem kennzeichnenden Teil von Anspruch 1 erreicht.

Dadurch, dass der Film erst auf dem Blech erstellt wird, entfällt der gesamte Fertigungsprozess für die Folie, das Beschichtungsmaterial, vorzugsweise ein Thermoset- oder Thermoplastmaterial, wird direkt, auf das ungerollte Blech aufgebracht. Vorzugsweise gelangt es als viskose Masse auf das Blech.

Dem Wortlaut von Anspruch 2 folgend, wird hierzu bevorzugterweise das Material viskos aus einem Werkzeug, insbesondere einer Breitschlitzdüse, auf das Blech aufgebracht, wobei vorzugsweise das Material extrudiert wird. Zur Einstellung der pro Zeiteinheit aus dem Ausgabewerkzeug ausgegebenen Materialmenge wird weiter bevorzugterweise, insbesondere zwischen Extruder und Werkzeug, ein volumetrisch förderndes Aggregat geschaltet, vorzugsweise eine Zahnradpumpe.

Im weiteren wird das Material in Granulat- oder Pulverform zugespiesen, vorzugsweise aber in Draht- oder Strangfarm und danach entsprechend den Charakteristika des eingesetzten Thermoset- oder Thermoplastmaterials, die bekannt sind, plastifiziert und auf das Blech ausgegeben.

In einer weiteren bevorzugten Ausführungsvariante wird das Blech in Tafelform materialbeaufschlagt, wobei die Tafeln die Grösse entsprechend den herzustellenden Dosenzargen aufweisen, oder aber um ein Mehrfaches grösser sind und, nach der Materialbeaufschlagung, einfach d.h. in einer Richtung oder doppelt, d.h. in Kreuzform, zur Erstellung der notwendigen Einzeltafeln geschnitten wird. Insbesondere durch die Bemessung der Breite des Ausgabewerkzeuges, dessen Ausgabetaktes bezüglich der Vorschubgeschwindigkeit des Bleches, Erstellen einer gezielt gesteuerten Relativbewegung von Blech und Ausgabewerkzeug werden die bekanntlich notwendigen Streifen für das nachmalige Verschweissen der eingerollten Zargentafeln von Thermoplast- bzw. Thermosetmaterial freigehalten. Gegebenenfalls können auch Markierungen, Abstreifer u. dgl. das Einfliessen des erwähnten Materials auf die freizuhaltenden Streifen verhindern.

In einer weiteren bevorzugten Ausführungsvariante des Verfahrens wird das Blech in Bandformmaterial beaufschlagt. Damit ist ein kontinuierlicher Beschichtungsprozess möglich, indem am kontinuierlich vorgeförderten Blechband das Filmmaterial abgelegt wird und die zum Schweissen notwendigen Streifen in Bandlaufrichtung, lateral freigehalten werden. Nachteilig bei diesem Vorgehen ist lediglich, dass das Einrollen des Bleches zur Zargenbildung um eine Einrollachse parallel zur Walzrichtung des Blechbandes erfolgt, was meistens eher ungünstig ist.

Dem Wortlaut von Anspruch 6 folgend, wird nämlich vorzugsweise das Blech nach Erstellung des Filmes bezüglich einer Achse quer zur Walzrichtung zur Zargenformung eingerollt. Wird somit Blech in Bandform verarbeitet, gemäss Anspruch 5, und sollen Zargen durch Einrollen quer zur Walzrichtung erstellt werden, so ergibt sich die Notwendigkeit, das Band intermittierend materialzubeaufschlagen, um die zur Schweissung notwendigen Streifen quer zum Band freizuhalten.

Wird gemäss Wortlaut von Anspruch 7 ein Thermoplastmaterial aufgebracht, so wird vorzugsweise nach dem Aufbringen eine Einbrennoperation vorgenommen, welche zwischen 5 und 10 Sekunden dauert, bei Temperaturen zwischen 200°C und 270°C, vorzugsweise zwischen 230°C und 250°C.

Wird dem Wortlaut von Anspruch 8 folgend ein Thermosetmaterial eingesetzt, so wird für den Materialauftrag das Blech erwärmt, vorzugsweise auf über 100°C, vorzugsweise auf ca. 120°C und nach dem Aufbringen wird das aufgebrachte Material erhitzt, vorzugsweise auf über 200°C, vorzugsweise auf ca. 230°C und dies wiederum für eine Zeitspanne von 5-10 Sekunden, vorzugsweise von ca. 6 Sekunden.

Sowohl beim Einsatz eines Thermoset- wie auch eines Thermoplastmaterials kann es angezeigt sein, nach dem Aufbringen des Materials und der vorerwähnten, materialspezifischen thermischen Nachbehandlung, einen thermischen Abschreckvorgang vorzunehmen, bei welchem das Blech mit dem Film innerhalb von ca. 5 sec. auf ca. 40 °C abgekühlt wird.

Gemäss Wortlaut von Anspruch 11 wird nach der Dosenzargenherstellung durch Randverschweissung, deren Schweissnaht mit einem mit dem erwähnten Material kompatiblen Material beschichtet, vorzugsweise mit dem selben Material.

Dem Wortlaut von Anspruch 12 folgend, kann mit dem erfindungsgemässen Verfahren ein Einzelfilm erstellt werden, zwei oder mehrere derartige Filme hintereinander oder aber ein oder mehrere solcher Filme als Teil eines mindestens zweilagigen Schichtsystems.

Dem Wortlaut von Anspruch 13 folgend, werden erfindungsgemäss relativ dünne Filme - den Schutzerfordernissen entsprechend - hergestellt, nämlich von 5-25 um Dicke, dabei vorzugsweise für Thermosetmaterialfilme von 7-15 um, vorzugsweise von ca. 10 um für Thermoplastmaterialfilme von 15-25 um, vorzugsweise von ca. 20 um. Es ist ersichtlich, dass erfindungsgemäss wesentlich dünnere Filme abgelegt werden können, als wenn der Film durch Ablage einer Filmfolie auf dem Blech erstellt wird, gemäss der eingangs erwähnten EP-A.

Erfindungsgemäss hergestelltes Blech zeichnet sich nach dem Wortlaut der Ansprüche 14 -17 aus, eine erfindungsgemässe Anlage mit ihren bevorzugten Ausführungsformen gemäss den Ansprüchen 18-24, und eine erfindungsgemässe Herstellanlage für fertige Dosenzargen nach Anspruch 25.

Die Erfindung ist nicht limitiert auf die Verwendung von thermoplastischen Materialien. Sie erstreckt sich auch auf die Verwendung von Mehrkomponent- oder an der Luft erhärtenden Materialien. Erfindungsgemäss hergestellte Bleche sind dann mit diesen Materialien versehen, während die erfindungsgemässe Anlage die entsprechenden Mittel aufweist.

Die Erfindung wird anschliessend beispielsweise anhand von Figuren erläutert. Es zeigen:
- Fig. 1: schematisch, anhand eines Funktionsblockdiagrammes, das erfindungsgemässe Verfahren bzw. der grundsätzliche Aufbau einer erfindungsgemässen Anlage
- Fig. 2: schematisch, anhand eines Funktionsblockdiagrammes, den Aufbau einer ersten Ausführungsform einer nach dem erfindungsgemässen Verfahren arbeitenden Anlage
- Fig. 3: in einer Darstellung analog zur derjenigen von Fig. 2 eine weitere Ausführungsvariante einer erfindungsgemässen Anlage
- Fig. 4: perspektivisch, das Schema einer weiteren Ausführungsvariante einer Weiterverarbeitungsstufe an einer erfindungsgemässen Anlage mit kontinuierlicher Blechbeschichtung
- Fig. 5: in perspektivischer Darstellung, schematisch, eine Beschichtungsstation an einer erfindungsgemässen Anlage in einer ersten Variante
- Fig. 6: in Darstellung analog zu derjenigen von Fig. 5 eine Beschichtungsstation in einer weiteren Konfiguration.

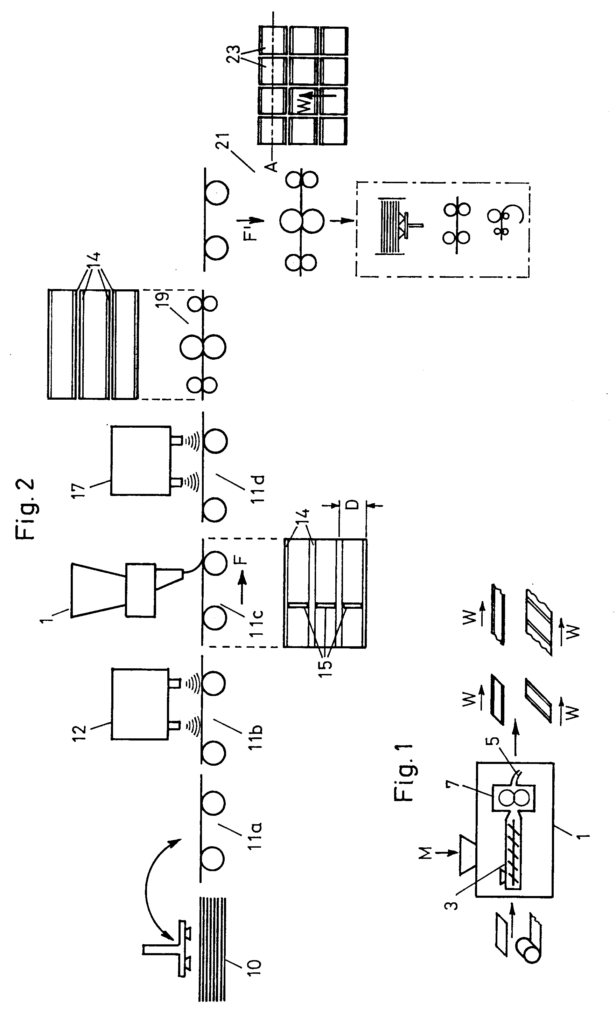

Gemäss Fig. 1 wird grundsätzlich Blech für die Herstellung der Zargen von Dreiteildosen wie nachmals zu erläutern sein wird, in Tafelform oder bandförmig einer erfindungsgemässen Beschichtungsstation 1 zugeführt. Der Beschichtungsstation 1 wird ein Thermoset- oder Thermoplastmaterial M als Granulat, Pulver oder vorzugsweise strang- oder drahtförmig zugespiesen. Dort wird es zu einer viskosen Masse gewandelt, vorzugsweise und wie in Fig. 1 schematisch dargestellt, mittels eines Extruders 3. An einem Ausgabewerkzeug 5, beispielsweise in Form eines Flächenauftragkopfes, z.B. mit Schlitzdüse, wie er von der Firma Robatec hergestellt wird, wird die viskose Schmelze direkt auf das durch die Beschichtungsstation 1 durchtransportierte Blech abgelegt. Die Filmbildung erfolgt direkt auf dem Blech. Je nach Eigenschaft des eingesetzten unter dem Sammelnamen "Hotmelt" bekannten Thermoset- bzw. Thermoplastmaterials, werden die thermischen Verhältnisse zur Bildung der viskosen Masse, deren Ablage auf dem Blech sowie die thermische Nachbehandlung des aufgebrachten Materials gestellt. In bevorzugter Art und Weise wird weiter wie dies für die Bearbeitung viskoser Polymerschmelzen bekannt ist, die pro Zeiteinheit durch das Ausgabewerkzeug 5 auf das Blech abgelegte Materialmenge mittels eines volumetrisch fördernden Aggregates, vorzugsweise mittels einer Zahnradpumpe 7 gestellt.

Ausgangsseitig der Station 1 erscheinen:
- Bei Tafelzuspeisung:: Beschichtete Tafeln mit filmfreien Parallelstreifen, vorzugsweise quer zur Blechwalzrichtung W.
- Bei Bandzuspeisung:: Ein beschichtetes Band mit filmfreien Parallelstreifen, vorzugsweise quer zur Blechwalzrichtung W.

Gemäss Fig. 2 werden an einer ersten Ausführungsvariante einer erfindungsgemässen Anlage Blechtafeln 10, beispielsweise magnetisch einem Förderer 11a,b,..., beispielsweise einem Endlosbandförderer mit weiteren Sektionen zugeführt.

Insbesondere bei der Verwendung eines Thermosetmaterials werden die Blechtafeln an einer Vorwärmstation 12, durch welche sie mit dem Förderer gefördert werden, mittels bekannter Mittel, beispielsweise mittels Infrarot, Heissluft, Induktionsheizung etc. vorgewärmt auf eine Temperatur, vorzugsweise im Bereiche von 100°C- 130°C, vorzugsweise von ca. 120°C. Die derart voraufgewärmten Blechtafeln werden der in Fig. 2 schematisch dargestellten Beschichtungsstation 1 gemäss Fig. 1 zugeführt, wo die viskose Thermoset- bzw. Thermoplastmaterialschmelze auf die jeweils in Bearbeitung stehende Blechtafel abgelegt wird. Wie unterhalb der Beschichtungsstation 1 in Fig. 2 dargestellt, werden dabei, in Funktion des Umfanges D der herzustellenden Dosenzargen beabstandete Streifen 14, welche sich hier in Förderrichtung F der Blechtafeln erstrecken, von der Beschichtung freigehalten, indem beispielsweise und wie bei 15 dargestellt, mehrere seitlich versetzte Breitschlitzdüsen als Werkzeuge 5 gemäss Fig. 1 eingesetzt werden.

Anschliessend an den Auftrag des Thermoset- oder Thermoplastmaterials an der Beschichtungsstation 1 werden die beaufschlagten Blechtafeln einer Polymerisation (für Thermoset) bzw. Einbrenn-(für Thermoplast) Station 17 zugeführt. Bei der Verarbeitung von Thermosetmaterialien wird dort eine Erwärmung auf eine Temperatur von vorzugsweise über 200°C vorgenommen, vorzugsweise auf ca. 230°C, während einer Zeitspanne von 5-10 Sekunden, vorzugsweise von ca. 6 Sekunden, um die Polymerisation des aufgebrachten Materials durchzuführen. Bei Verarbeitung eines Thermoplastmaterials wird an der Station 17 eine Erwärmung, vorzugsweise auf einen Temperaturbereich von 200°C - 270°C vorgenommen, vorzugsweise von 230°C - 250°C und dies während einer Zeitspanne von 5-10 Sekunden. Die Dicke der abgelegten Filme beträgt 5-25 um, vorzugsweise für Thermosetmaterialien 7-15um, vorzugsweise ca. 10,um und für Thermoplastmaterialien 15-25um , vorzugsweise ca. 20um.

Anschliessend an die Station 17 werden die beschichteten Blechtafeln an einer Schneidestation 19 mittig der Streifen 14 getrennt, schliesslich, an einer Station 21 senkrecht zu den Streifen 14 zu Dosenzargentafeln 23 getrennt. Anschliessend werden die fertiggestellten Dosenzargentafeln z.B. nach Umstapeln, Weitertransportieren, schliesslich, zur Bildung der Zargen, eingerollt und entlang der filmfreien Ränder, aus den Streifen 14 entstanden, verschweisst.

Selbstverständlich können mit diesem Vorgehen ebenso wie mit den noch zu beschreibenden, mehrere Filmlagen abgelegt werden durch sequentielles Aufbringen des Materials. Gegebenenfalls können auch mehrere Schichten vorgesehen werden, kombiniert durch erfindungsgemässes Vorgehen, d.h. Ablegen der viskosen Masse und bekanntem Vorgehen wie z.B. Ablegen vorgefertigter Folien. Das dargestellte Vorgehen eignet sich selbstverständlich sowohl für die Innen- wie auch für die Aussenbeschichtung der Zargen. Der Einsatz der erwähnten Materialien wird allerdings bevorzugterweise für die Innenbeschichtung vorgesehen. Nach dem Verschweissen der eingerollten Dosenkörper wird die Schweissnaht vorzugsweise mit dem selben Material, also einem Thermoset bzw. Thermoplastmaterial beschichtet.

In Fig. 2 ist bei A die Einrollachse zur Bildung der Dosenzargen dargestellt. Wie daraus ersichtlich, erfolgt das Einrollen bezüglich einer Achse A, die in Förderrichtung F der Blechtafeln liegt. Dies bedingt, weil Einrollen üblicherweise während einer Vorschubbewegung quer zur Einrollachse A erfolgt, eine rechtwinklige Bahnänderung der geförderten Bleche, wie durch den Uebergang von F auf F' dargestellt ist.

Da die Einrollachse A üblicherweise quer zur Walzrichtung W des Bleches erfolgt, sind die Tafeln 10 ab Band mit Bandrichtung entsprechend weggeschnitten.

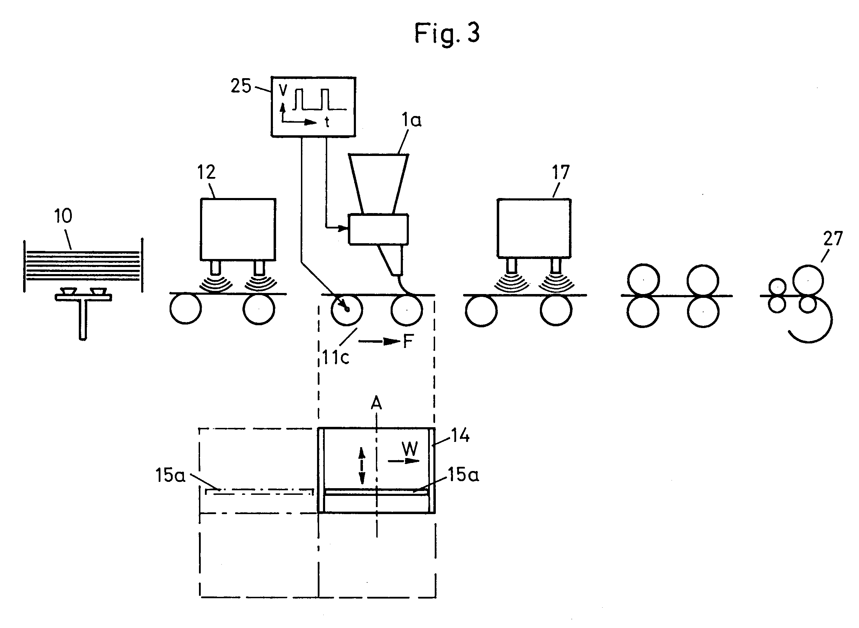

In Fig. 3 ist eine weitere Ausführungsvariante einer erfindungsgemässen Anlage dargestellt. Es sind die gleichen Bezugszeichen verwendet für gleiche Funktionseinheiten wie in

Der wesentliche Unterschied zur Ausführungsvariante gemäss Fig. 2 liegt bei der Beschichtungsstation 1a der Ausführungsvariante gemäss Fig. 3. Wie unterhalb der Station 1a dargestellt, wird das Ausgabewerkzeug beispielsweise in Form einer Breitschlitzdüse 15a quer zur Förderrichtung F der Anlage bewegt, wobei die Blechtafeln während des Materialauftrags stillgesetzt sind. Dies erfordert einen intermittierenden Antrieb des Förderers 11c im Bereich der ebenfalls vorzugsweise intermittierend betriebenen Beschichtungsstation 1a, wie dies mit der Ansteuerungseinheit 25 dargestellt ist. Sind die Bewegungs-Saccaden des Förderers 11c von Stillstandsphase zu Stillstandsphase schnell genug, kann gegebenenfalls auf eine Taktsteuerung der Ausgabe an Station 1a verzichtet werden. In Fig. 3 ist die Bearbeitung bereits zugeschnittener Dosenzargenblechtafeln dargestellt. Gestrichelt ist aber veranschaulicht, dass auch bei diesem Vorgehen Blechtafeln beschichtet werden können, deren Ausdehnung ein Vielfaches der Zargenblechtafeln beträgt, was ein anschliessendes Ein- oder Zweirichtungsschneiden erforderlich macht. Weil bei diesem Vorgehen die Einrollachse A bereits quer zur Förderrichtung F der Anlage steht, kann ohne Richtungswechsel wie bei der Station 27 dargestellt, gegebenenfalls nach Trennen der Blechtafeln zum Einrollen der Zargen übergegangen werden. Die Walzrichtung W liegt hier in Förderrichtung F.

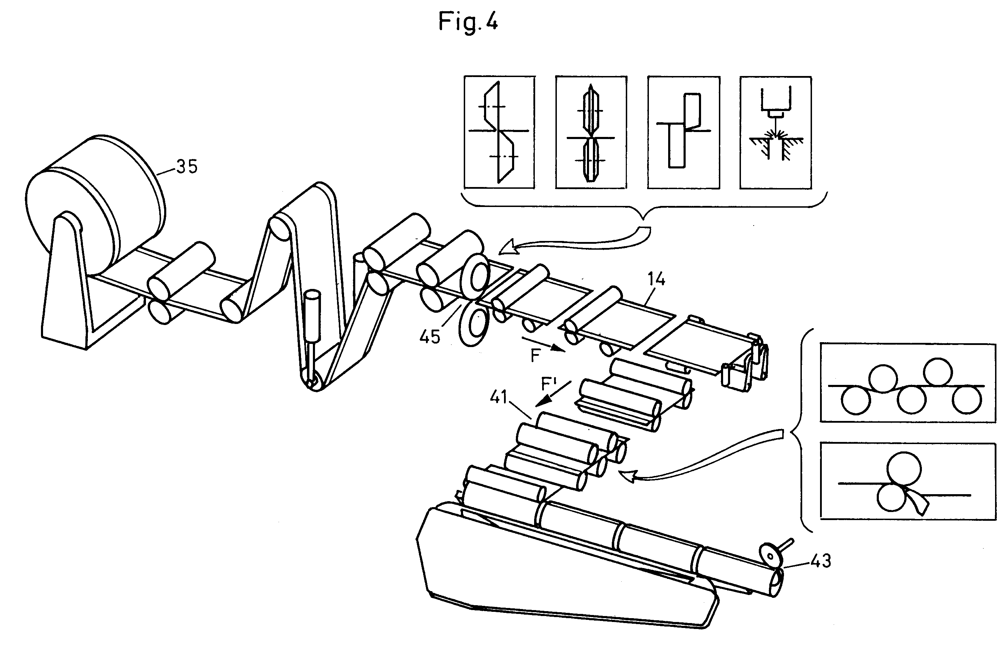

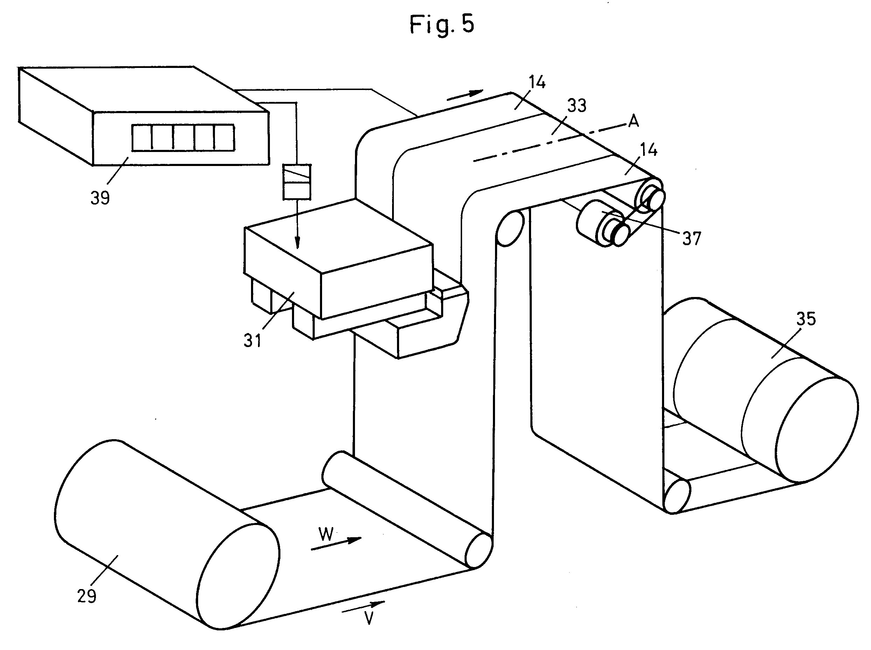

Anhand der Fig. 4 und 5 soll eine weitere Ausführungsvariante der erfindungsgemässen Anlage erläutert werden, bei welcher nicht Blechtafeln, sondern, kontinuierlich, Bandblech beschichtet und weiterbearbeitet wird.

Gemäss Fig. 5 wird ab einer Rolle 29 Bandblech mit der Walzrichtung W entlang des schematisch dargestellten Ausgabewerkzeugs 31 für das Thermoset- bzw. Thermoplastmaterial bewegt. Bei entsprechend bemessener Breite des Ausgabewerkzeuges wird dadurch Material 33 kontinuierlich aufgebracht, die streifen 14 davon freigehalten. Das beschichtete Bandblech wird z.B. auf Rolle 35 aufgerollt oder direkt weiterbehandelt. Ueber einen Tachogenerator 37 wird z.B. die Vorschubgeschwindigkeit V des Bandbleches erfasst und über eine Steuereinheit 39 die Ausgabemenge des Materials pro Zeiteinheit entsprechend geführt, beispielsweise über Steuerung der Drehzahl einer vorgesehenen Zahnradpumpe gemäss Fig. 1. Wie aus der Lage der Randstreifen 14 ohne weiteres ersichtlich, liegt hier die Einrollachse A in Richtung der Bandblechförderung F und der Walzrichtung.

Wie bereits anhand von Fig. 2 erläutert wurde und wie in Fig. 4 dargestellt, muss hier zum Einrollen eine rechtwinklige Bahnänderung der Bleche erfolgen. Ab der Rolle 35 wird das beschichteten Bandblech bei 45 geschnitten, dann erfolgt die Förderrichtungsänderung von F nach F'. Anschliessend werden die Tafeln an der Einrollstation 41 eingerollt und schliesslich an der schematisch dargestellten Schweissstation 43 entlang der beschichtungsfreien Ränder 14 verschweisst. Wiewohl in Fig. 4 und 5 das beschichtete Band erst an einer Rolle 35 zwischengelagert wird, ist es selbstverständlich durchaus möglich, die Beschichtung gemäss Fig. 5 und die Weiterverarbeitung gemäss Fig. 4 in line zu schalten. Das Querschneiden des kontinuierlichen Bandes erfolgt an der Station 45 in bekannter Art und Weise, sei dies mittels Laser, mittels Schneidrollen oder mittels Schneidstanzen.

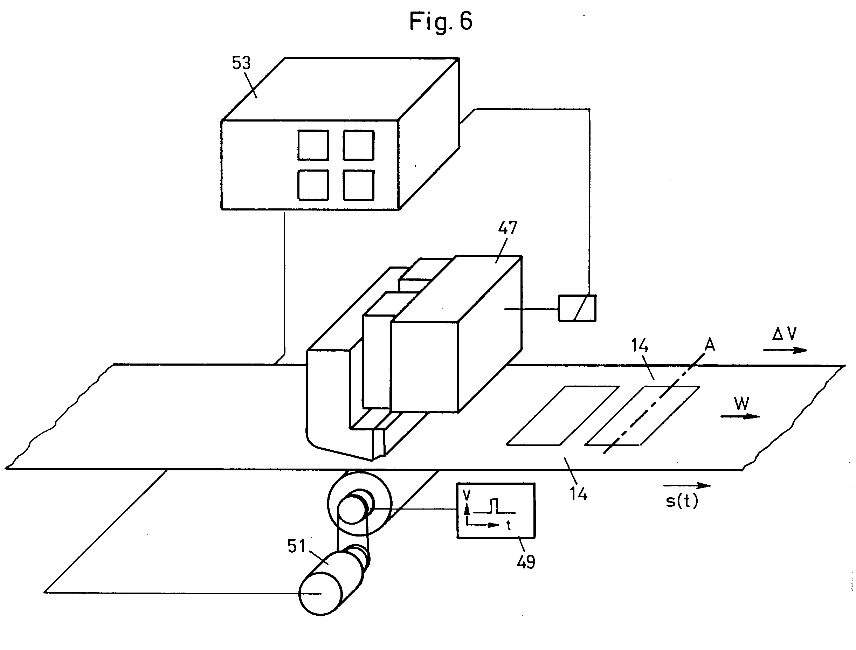

In Fig. 6 ist die Ausbildung der Beschichtungsanlage für die Beschichtung von Bandblech dargestellt, wenn anschliessend ohne Förderrichtungswechsel, also analog zu Fig. 3 Einrollen erfolgen soll, mit Einrollachse A quer zur Walzrichtung W.

Das Bandblech wird hier wie mit der Steuereinheit 49 dargestellt, in sich folgenden Intervallen langsam und rasch am Werkzeug der Beschichtungsanordnung 47 vorbeigeführt, oder in Beschichtungszeitabschnitten stillgesetzt, in denen dann analog zu Fig. 3 das Werkzeug querbewegt wird. Die Taktvorgabe und die Ueberwachung erfolgt beispielsweise über einen Inkrementalwinkelnehmer 51, welcher die Steuereinheit 53 ansteuert, welch letztere wiederum die Material-Ausgabe an der Beschichtungseinheit 47 ansteuert. Wird auf diese Art und Weise nicht ein kontinuierliches Blechband bearbeitet, sondern vorgeschnittene Blechtafeln, so kann der Arbeitstakt selbstverständlich durch Vorsehen einer die Schnittstellen detektierenden Photodiode (nicht dargestellt) gesteuert werden.

Nicht dargestellt in den Figuren ist eine Anlage, bzw. deren Organe, welche ein aus mehreren Komponenten bestehendes Beschichtungsmaterial aufnehmen, zum Beispiel vermischen und dann auf das Blech austragen kann. Weiter nicht dargestellt ist eine Anlage, bzw. deren Organe, welche zum Beispiel an der Luft oder durch einen sonstigen chemischen Ablauf erhärtendes Beschichtungsmaterial verarbeitet.

Gemeinsam ist jedoch allen Ausführungsformen, dass nicht mehr Beschichtungen vorgesehen sind, wo beim Erhärten die herkömmlichen Lösungsmitteldämpfe entstehen und entsorgt werden müssen.

Mit der beschriebenen Erfindung werden insbesondere die Vorteile erwirkt, dass
- für die Innen- und/oder Aussenbeschichtung von Zargen für die Dreiteildosenherstellung keine Lösungsmittel eingesetzt werden müssen
- die Beschichtung mit einem mit der Schweissnahtabdeckung innen und/oder aussen kompatiblen Material erfolgen kann, vorzugsweise mit dem gleichen Material
- verglichen mit Nasslackbeschichtungen mit nachgeschaltetem Lösungsmittelaustrieb, wesentlich kürzere thermische Bearbeitungsstrecken vorgesehen werden müssen
- verglichen mit dem Aufkaschieren vorgefertigter Folien geringere Filmdicken erstellt werden können und ein eigener Fertigungsprozess für die Kaschierfolie entfällt.

## Patentansprüche

1. Verfahren zur Innen- und/oder Aussenbeschichtung von Blech für Dosenzargen von Dreiteildosen, bei dem auf ungerolltes Blech mindestens ein Beschichtungsmaterialfilm aufgebracht wird, dadurch gekennzeichnet, dass der Film erst auf dem Blech erstellt wird.

2. Verfahren vorzugsweise nach mindestens einem der Ansprüche wie nach Anspruch 1, dadurch gekennzeichnet, dass das Material als viskose Masse aus einem Werkzeug auf das Blech aufgebracht, dabei vorzugsweise extrudiert wird, dabei vorzugsweise die Ausgabemenge des Materials pro Zeiteinheit mittels eines volumetrischen Förderaggregates gestellt wird, vorzugsweise mittels einer Zahnradpumpe.

3. Verfahren vorzugsweise nach mindestens einem der Ansprüche wie nach einem der Ansprüche 1 oder 2, dadurch gekennzeichnet, dass das Material ausgehend von Granulat, Pulver, vorzugsweise ausgehend von Material in Draht- oder Strangform verarbeitet wird.

4. Verfahren vorzugsweise nach mindestens einem der Ansprüche wie nach einem der Ansprüche 1 - 3, dadurch gekennzeichnet, dass das Blech in Tafelform vorliegt mit einer Ausdehnung entsprechend der Dosenzarge oder grosser, im letzterwähnten Fall nach dem Materialauftrag in einer oder in zwei orthogonalen Richtungen geschnitten wird.

5. Verfahren vorzugsweise nach mindestens einem der Ansprüche wie nach einem der Ansprüche 1-3, dadurch gekennzeichnet, dass das Blech in Bandform vorliegt.

6. Verfahren vorzugsweise nach mindestens einem der Ansprüche wie nach einem der Ansprüche 1 - 5, dadurch gekennzeichnet, dass das Blech nach Erstellen des Filmes quer zur Walzrichtung zur Zargenformung eingerollt wird.

7. Verfahren vorzugsweise nach mindestens einem der Ansprüche wie nach einem der Ansprüche 1 - 6, dadurch gekennzeichnet, dass ein Thermoplastmaterial aufgebracht wird und nach Aufbringen Einbrennen vorgenommen wird, vorzugsweise während 5 - 10 Sekunden, weiter vorzugsweise mit einer Temperatur von 200°C - 270° C, vorzugsweise von 230°C - 250° C.

8. Verfahren vorzugsweise nach mindestens einem der Ansprüche wie nach einem der Ansprüche 1 - 7, dadurch gekennzeichnet, dass ein Thermosetmaterial aufgebracht wird, für das Aufbringen das Blech erwärmt wird, vorzugsweise auf über 100°C, vorzugsweise auf ca. 120° C und nach dem Aufbringen das Material erhitzt wird, vorzugsweise auf über 200° C, vorzugsweise auf ca. 230° C und dies für eine Zeitspanne von 5 - 10 Sekunden, vorzugsweise von ca. 6 Sekunden.

9. Verfahren vorzugsweise nach mindestens einem der Ansprüche wie nach einem der Ansprüche 1 - 8, dadurch gekennzeichnet, dass dem Aufbringen ein thermischer Abschreckvorgang folgt, bei welchem Blech mit Film innerhalb von ca. 5 sec. auf ca. 40 °C abgekühlt wird.

10. Verfahren vorzugsweise nach mindestens einem der Ansprüche, wie nach einem der Ansprüche 1 - 9, dadurch gekennzeichnet, dass die nachmals zu verschweissenden Ränder des Bleches, entsprechend dem Dosenzargenumfang, entlang zweier paralleler Streifen, nicht materialbeaufschlagt werden.

11. Verfahren vorzugsweise nach mindestens einem der Ansprüche, wie nach einem der Ansprüche 1 - 10, dadurch gekennzeichnet, dass die Dosenzargen nach dem Erstellen des Filmes eingerollt und verschweisst werden und dass nachmals die Schweissnaht, insbesondere innerhalb der Zarge, mit einer mit dem Material kompatiblen, vorzugsweise mit demselben Material schutzbeschichtet wird.

12. Verfahren vorzugsweise nach mindestens einem der Ansprüche 1-11, dadurch gekennzeichnet, dass zwei oder mehr der Filme erstellt werden oder der Film als Teil eines mindestens zweilagigen Systems aufgebracht ist.

13. Verfahren vorzugsweise nach mindestens einem der Ansprüche 1-12, dadurch gekennzeichnet, dass der Film 5-25um dick erstellt wird, vorzugsweise für Thermoset-Material 7-15,um, vorzugsweise ca. 10um, für Thermoplast-Material 15-25um, vorzugsweise ca. 20um.

14. Blech zur Erstellung einer Dosenzarge für eine Dreiteildose, welches, mindestens einseitig, einen Beschichtungsmaterialfilm aufweist, dadurch gekennzeichnet, dass die Filmbildung auf dem Blech erfolgt ist.

15. Blech vorzugsweise nach Anspruch 14, dadurch gekennzeichnet, dass daran mindestens zwei parallele Streifen filmfrei sind.

16. Blech vorzugsweise nach mindestens einem der Ansprüche wie nach Anspruch 15, dadurch gekennzeichnet, dass sich die filmfreien Streifen quer zur Walzrichtung des Bleches erstrecken.

17. Blech vorzugsweise nach mindestens einem der Ansprüche 14-16 in Bandform.

18. Anlage zur Innen- und/oder Aussenbeschichtung von Blech für die Herstellung der Zargen von Dreiteildosen, mit einer Förderanordnung für das Blech sowie mindestens einer ihr entlang angeordneten Beschichtungsstation, der das Blech zugeführt wird und sie, versehen mit mindestens einem Beschichtungsmaterialfilm, verlässt, dadurch gekennzeichnet, dass die Beschichtungsstation mindestens ein einer Förderanordnung für das Blech durch die Station gegenüberliegendes Ausgabewerkzeug aufweist, das mit einer Zuführungsanordnung für Beschichtungsmaterial verbunden ist.

19. Anlage vorzugsweise nach mindestens einem der Ansprüche wie nach Anspruch 18, dadurch gekennzeichnet, dass dem Werkzeug ein Extruder vorgeschaltet, vorzugsweise zwischen Extruder und Werkzeug ein volumetrisch förderndes Aggregat, vorzugsweise eine Zahnradpumpe, zwischengeschaltet ist.

20. Anlage vorzugsweise nach mindestens einem der Ansprüche wie nach einem der Ansprüche 18 oder 19, dadurch gekennzeichnet, dass der Beschichtungsstation mindestens eine Schneidstation für das Blech nachgeschaltet ist, mittels welcher das beschichtete Blech in einer Richtung oder, in zwei zueinander rechtwinkligen Richtungen zugeschnitten wird.

21. Anlage vorzugsweise nach mindestens einem der Ansprüche wie nach einem der Ansprüche 18-20, dadurch gekennzeichnet, dass der Beschichtungsstation eine Heizstation vor- und/oder nachgeschaltet ist.

22. Anlage vorzugsweise nach mindestens einem der Ansprüche wie nach einem der Ansprüche 18-21, dadurch gekennzeichnet, dass die Förderanordnung von einem Bandblechspeicher beschickt wird.

23. Anlage vorzugsweise nach mindestens einem der Ansprüche wie nach einem der Ansprüche 18-22, dadurch gekennzeichnet, dass der Beschichtungsstation eine Einrollstation nachgeschaltet ist zur Bildung beschichteter Dosenzargen, wobei die Einrollstation das Blech bezüglich einer Achse quer zur Förderrichtung oder in Förderrichtung einrollt.

24. Anlage vorzugsweise nach mindestens einem der Ansprüche wie nach einem der Ansprüche 18-23, dadurch gekennzeichnet, dass der Beschichtungsstation eine Kühlstation nachgeschaltet

25. Anlage zur Herstellung von Dosenzargen für Dreiteildosen mit einer Anlage nach einem der Ansprüche 18-24, dadurch gekennzeichnet, dass der Beschichtungsstation eine Einrollstation, eine Schweissstation und eine Schweissnahtbeschichtungtsstation nachgeschaltet ist, welche von einem Thermoset- oder Thermoplastmaterial beschickt wird.
